# EUROPEAN PATENT APPLICATION

(11) **EP 2 551 284 A1**
(43) Date of publication of application: **30.01.2013**
(21) Application number: 11382254.8
(22) Date of filing: 25.07.2011
(51) Int. Cl.: C08F 2/20, C08F 2/38

(54) **Process for the preparation of random copolymers of vinyl halide and acrylate monomers**

(71) Applicant: Ercros, S.A., 08024 Barcelona (ES)
(72) Inventor: Obeso Cáceres, Rafael, 22400 MONZÓN (ES); Pascual Fernández, Belén, 22400 MONZÓN (ES); Asua González, José María, 20018 SAN SEBASTIÁN (ES)
(74) Representative: ZBM Patents

(57) **Abstract**

It is provided a process for the preparation of an essentially homogeneous random copolymer from a vinyl halide monomer and an acrylate monomer, the process comprising polymerizing by a reversible-deactivation radical polymerization a vinyl halide monomer and an acrylate monomer in aqueous medium in the presence of an amphiphilic substance, a buffer, a reversible-deactivation radical initiator, a non-metallic catalyst and, optionally, a phase transfer catalyst, wherein an excess of the vinyl halide monomer together with a certain amount of the acrylate monomer are loaded in the reactor, and thereafter the rest of the acrylate monomer is added at a decreasing flow rate such that the composition of the copolymer obtained remains constant throughout the process. It is also provided a copolymer obtainable by this process and an article comprising such a copolymer.

## Description

The present invention relates to the field of polymer chemistry, more particularly to random copolymers. In particular the invention relates to a process for the preparation of essentially homogeneous random copolymers from a vinyl halide monomer, such as vinyl chloride, and an acrylate monomer by a reversible-deactivation radical polymerization reaction in aqueous medium and to the copolymer obtained therefrom.

### BACKGROUND ART

Poly(vinyl chloride) (PVC) is among the largest volume thermoplastics in the world due to its great versatility and its excellent price/performance ratio. In the last years there is a growing demand for flexible PVC compounds with rubbery and elastomeric properties without using liquid plasticizers and at a reasonable cost.

The possibility of obtaining flexible materials made of PVC without using conventional plasticizers is extremely important for the industry, as these type plasticizers, and more specifically phthalates, has important drawbacks mainly related to problems derived from its migration (toxicity, ageing behaviour) and the increasing of its cost produced in recent years.

Copolymerization of vinyl chloride with "soft" monomers (monomers leading to low Tg polymers) is a way to avoid de use of plasticizers and the problems associated with them. Copolymerization with acrylates allows reducing the Tg, increases the flexibility and so allows to avoid the use of plasticizers.

Random copolymers of vinyl chloride with other monomers, such as acrylates, prepared by conventional free-radical polymerization are known for a long time (e.g. EP 0358181, US 3884887, US 2009/0143547). Nevertheless, conventional free-radical polymerization does not allow a good control of the copolymer structure and molecular weight, due to the complex polymerization mechanism of the monomers involved, particularly of the acrylate monomer. A problem associated to the use of acrylates in conventional free-radical polymerization is their tendency to form branched chains and cross-linked structures. This, together with the differences in reactivity ratios of the acrylic and vinyl halide monomers involved in the polymerization reaction, prevents to get a good control of the structure and molecular weight of the copolymer. As a consequence, copolymers with structural defects and reduced thermal stability are obtained, what limits the technological applications of the final copolymer. Additionally, the removal from the obtained product of the solvents used in some of the known processes and/or of the unreacted monomers, particularly of the acrylate monomer, is difficult to achieve.

According to IUPAC (A. D. Jenkins et al., Pure Appl. Chem., 2010, Vol. 82, No. 2, pp. 483-491), reversible-deactivation radical polymerization refers to a series of methods of radical polymerization that provide with polymers of predetermined molecular weight, functional chain ends and narrow molecular weight distribution. Single Electron Transfer - Degenerative Chain Transfer Living Radical Polymerization (SET-DTLRP) is one of these methods which are compatible with vinyl halide, particularly with vinyl chloride. WO 2003002621 discloses the polymerization of vinyl chloride by SET-DTLRP in the presence of non-metallic catalysts. It is also disclosed the possibility of obtaining copolymers by adding a co-monomer, such as an acrylate monomer, wherein the content of the later in the copolymer depends on the reactivity ratios of the monomers used. This is a strong limitation of the method because the content of the co-monomer is fixed by the reactivity ratios co-monomer-vinyl halide, namely, the content of a given co-monomer in the copolymer can not be controlled at wish. Therefore a person skilled in the art would expect that an attempt to obtain a random copolymer using the procedure disclosed therein would be accompanied by the above mentioned problems associated with different reactivity ratios unfavourable for vinyl chloride, leading to heterogeneous copolymers.

WO 2006080928 discloses a process for the formation of block copolymers of halogen-containing polymers such as PVC utilizing various metal or non-metal catalysts and the living radical block copolymerization of various types of acrylic monomers such as alkyl acrylates or alkyl alkacrylate monomers. This document does not disclose any process for the preparation of random copolymers.

Additionally, the processes disclosed in the prior art, apart from suffering from the drawbacks mentioned above linked either to the polymerization technique itself or to the different reactivity ratios of the monomers involved in the copolymerization process, do not allow to obtain a final product wherein all the loaded acrylate monomer is reacted.

The presence of unreacted acrylate monomer in the final product is unacceptable for health reasons and because acrylate acts as a plasticizer and distorts the properties of the copolymer. On the other hand, the removal of unreacted acrylate, which is partly held in the copolymer particles and partly dissolved in the effluent, tremendously complicates industrial implementation of the process. The extraction of the acrylate retained in the particles requires a complicated and expensive technology that increases the cost of the process. Finally, the inevitable presence of traces of acrylate in the unreacted vinyl halide, which is subsequently recovered, generates serious problems when the vinyl halide is reused.

Thus, there continues to be a need of a process which allows obtaining in an aqueous medium an essentially homogeneous random copolymer with a low content of structural defects from a vinyl halide monomer, such as vinyl chloride, and an acrylate monomer, wherein all the acrylate monomer is reacted.

### SUMMARY OF THE INVENTION

Inventors have developed an improved process for the preparation of a homogeneous random copolymer by a reversible-deactivation radical polymerization from a vinyl halide monomer and an acrylate monomer, wherein an excess of the vinyl halide monomer together with a certain amount of the acrylate monomer are loaded in the reactor, and thereafter the rest of the acrylate monomer is added at a decreasing flow rate. Advantageously, the composition of the copolymer obtained by the process of the invention remains essentially constant throughout the process. Said in other words, regardless of the moment the reaction is stopped, the copolymer composition is always essentially the same.

Advantageously the process of the invention allows to obtain a highly uniform copolymer from vinyl halide and acrylate monomers, with improved transparency and tensile properties (such as a higher tensile strength), and substantially free of unreacted acrylate monomer. Additionally, the process of the invention takes place with an important reduction of the reaction time, thus increasing industrial productivity.

Thus, an aspect of the invention is the provision of a process for the preparation of an essentially homogeneous random copolymer from a vinyl halide monomer and an acrylate monomer by reversible-deactivation radical polymerization in aqueous medium, the process comprising the following steps:
a) for a targeted amount and composition of the random copolymer, which defines the amounts of both vinyl halide and acrylate in the copolymer, loading in the reactor: water, an amphiphilic substance, a buffer, a reversible-deactivation radical initiator, optionally, a phase transfer catalyst, from 0.2 to 8 mol%, preferably from 0.5 to 6 mol%, and more preferably from 1 to 5 mol%, of acrylate monomer in respect to the amount of vinyl halide loaded in this step a),
   from a 110 to a 200 wt%, preferably from a 110 to a 160 wt%, and more preferably from a 120 to a 150 wt%, of the total amount of vinyl halide necessary to obtain the targeted amount of the copolymer of the targeted composition, and
   adding a non-metallic catalyst (activator of the SET-DTLRP) and, optionally, a phase transfer catalyst, in order to initiate de polymerization reaction; and
b) adding the amount of the acrylate monomer necessary to obtain the targeted amount of the copolymer of the targeted composition, wherein the addition is carried out at a decreasing flow rate,
thereby the composition of the formed copolymer remaining essentially constant throughout the whole reaction process.

The process of the invention is advantageous because it allows reducing the reaction time while achieving high conversions.

Another aspect of the invention relates to an essentially homogeneous random copolymer obtainable by the process of the invention.

The invention also concerns an article of manufacture made of a copolymer of the invention.

In another aspect the invention concerns a process for the manufacture of an article as defined above, the process comprising forming said article from a copolymer obtainable by the process of the invention.

### DETAILED DESCRIPTION OF THE INVENTION

In the context of the invention, the terms "essentially homogeneous copolymer", "essentially constant composition copolymer", and variations thereof mean that at least 90%, more preferably 95% and even more preferably 98% of the macromolecular chains of said copolymer contain essentially the same content of each of the two constituent monomers along the entire length of the chains, namely the content of each of the monomers does not vary more than 10% by weight, preferably not more than 5% by weight, more preferably not more than 2% by weight, relative to the average content of the respective monomer for all of the macromolecular chains along the entire length of said chains.

As mentioned above, an aspect of the invention relates to a process for the preparation of essentially homogeneous random copolymer from a vinyl halide monomer, such as vinyl chloride, and an acrylate monomer, the process comprising polymerizing by a reversible-deactivation radical polymerization a vinyl halide monomer and an acrylate monomer in aqueous medium under the specific reaction conditions mentioned above. The process by reversible-deactivation radical polymerization (also known as living radical polymerization, LRP) according to the invention proceeds mostly by a combination of competitive single electron transfer (SET) and degenerative chain transfer (DT) mechanisms and, therefore, it is called SET-DTLRP.

For a targeted amount and composition of the final copolymer, the process of the invention is carried out by first loading in the reactor water, a suitable amphiphilic substance, a buffer, a reversible-deactivation radical initiator and, optionally, a phase transfer catalyst, and a defined amount of acrylate monomer. After removing the oxygen from the reactor, an excess of vinyl halide (with respect to the theoretical amount of vinyl halide needed for obtaining the targeted amount of the copolymer of the targeted composition) is loaded. Then, the temperature is adjusted to the desired value and an aqueous solution of the catalyst is injected in order to start polymerization. Next, the remaining amount of acrylate monomer needed to obtain the targeted amount and composition of the copolymer is fed at a decreasing flow rate. As an instance, the decreasing flow rate can be as specified herein below.
The targeted composition of the copolymer will be chosen at will in the light of the intended final use, as it is apparent to those skilled in the art. The targeted amount of the final copolymer refers to the amount of copolymer that will be produced and which is taken as a reference for the calculation of the amount of monomers used during the polymerization process. Said targeted amount of the final copolymer is also chosen at will in the light of the production necessities.

The reaction can be carried out in conventional reactors. As an instance, for the copolymerization of vinyl halide and acrylate in aqueous medium a stirred tank reactor with or without reflux condenser can be used.

The copolymerization according to the invention is usually carried out in oxygen free atmosphere. The oxygen of the reactor can be removed by using a purge with an inert gas such as of nitrogen or argon or by vacuum. The copolymerization can be carried out at temperatures from 20-55°C, preferably from 25-50°C, and more preferably from 30-45°C.

The reactor is maintained at the desired temperature profile until all the acrylate has been charged.

The polymerization process in aqueous medium of this invention can be carried out in suspension, emulsion or microsuspension. Accordingly, the aqueous phase contains at least an amphiphilic substance which helps to stabilize the dispersion. The selection of the amphiphilic substance will depend on the kind of polymerization process. When the polymerization process is carried out in suspension or microsuspension a suspension agent is used, and when it is carried out in emulsion an emulsifier is used.

Suitable suspension agents include, but are not limited to, partially hydrolyzed vinyl acetate polymers, cellulose ethers or hydroxides, gelatin, starch, vinyl acetate-maleic anhydride copolymers, ethylene-vinyl acetate copolymers, alginates, esters of fatty acids with glycerol, ethylene glycol or pentaerythritol, and sorbitan monolaurate, or mixtures thereof. Preferred suspending agents are poly(vinyl acetate) with a degree of hydrolysis of 70-90 mol% and a viscosity of 5-60 mPa·s in a 4% (w/w) aqueous solution, hydroxypropyl methylcellulose with a 23-30 wt% of groups methoxy, a 6-10 wt% hydroxypropyl groups and a viscosity of 12-120 mPa·s in a 2% (w/w) aqueous solution, or mixtures thereof. The optimum amount of suspending agent depends on its nature, the desired particle size, the design of the reactor and the stirrer, the water/monomer proportion and the stirring speed, and can be chosen by one skilled in the art. The amount of suspending agent with respect to the total of comonomers may be between 100 and 20000 ppm, preferably between 200 and 15000 ppm, more preferably between 300 and 10000 ppm.

Suitable emulsifiers include, but are not limited to, those selected from the group consisting of anionic emulsifiers, cationic emulsifiers, nonionic emulsifiers, and mixtures thereof. Anionic and nonionic emulsifiers are preferred. Emulsifiers used in the present invention may contain one or more olefinicaly unsaturated group (reactive emulsifiers). Polymeric or oligomeric emulsifiers can also be used provided they form micelles when added to the hybrid dispersion.

Examples of anionic emulsifiers include, but are not limited to, alkyl sulfates such as sodium lauryl sulfate, alkyl-aryl sulfonates such as sodium dodecylbenzene sulfonate, polyoxyethylene alkyl ether sulfates, polyoxyethylene alkylphenyl ether sulfates, and diphenyl sulfonate derivatives.
Suitable nonionic emulsifiers include, but are not limited to, polyoxyethylene alkyl ethers and polyoxyethylene alkylphenyl ethers.

Suitable reactive emulsifiers include, but are not limited to, polyoxyethylene alkylphenyl ethers; polyoxyethylene alkylphenyl ether ammonium sulfates; sodium allyloxy hydroxypropyl sulphonate and allylsulphosuccinate derivatives.

Suitable polymeric emulsifiers include, but are not limited to, acrylic polymers.

These emulsifiers may be used alone or in combination of two or more thereof. The amount of the emulsifier used is, for example, from about 0.2 to 10 parts by weight, preferably from about 0.5 to 5 parts by weight, per 100 parts by weight of the targeted amount of copolymer.

The buffer compound is needed in the polymerization process in order to avoid acidic decomposition of sulfur containing catalysts. Typical buffers can include alkaline salts of inorganic and organic acids, able to keep the pH of water solutions in the range 8-10. These buffers include, but are not limited to, sodium bicarbonate (NaHCO₃), sodium dihydrogen phosphate (NaH₂PO₄) disodium phosphate (Na₂HPO₄), sodium acetate (CH₃COONa), or the potassium or ammonium salts thereof. The reaction mixture will usually contain from 0.001 to 5 moles of buffer per mole of catalyst, preferably from 0.5 to 2 moles of buffer per mole of catalyst, and more preferably from 0.1 to 1 moles of buffer per mole of catalyst. Alternatively, the amount of buffer is such that the pH of the reaction mixture is from 8 to 10.

The reversible-deactivation radical initiator, which may be a mono or difunctional initiator, is usually an electron acceptor halogen compound capable of being activated and produce a radical, which will initiate the polymerization of monomer. Generally, preferred reversible-deactivation radical initiators are activated halides, preferably containing chlorine, bromine or iodine, and more preferably containing bromine or iodine. Examples of these initiators include, but are not limited to, iodoform, bromoform, methylene iodide, methylene bromide, 1,1,2,2-tetrabromoethane, 1,1,2,2-tetraiodoethane, 1-chloro-1-bromoethane, 1-chloro-1-iodoethane, bencyl iodide, N-bromo and N-iodosuccinimide. Preferably the reversible-deactivation radical initiator is iodoform.

The amount of the reversible-deactivation radical initiator utilized depends on the desired molecular weight of the copolymer and can be calculated by the person skilled in the art. Generally, it is from 0.01 to 2 % mol, preferably from 0.02 to 1 mol%, and more preferably from 0.3 to 0.08 mol% of initiator with respect to the total content of monomers in the targeted amount of copolymer of the targeted composition.

From a practical standpoint, preferred copolymers have degrees of polymerization from 100 and 5000, more preferably from 250 and 4000 and even more preferably from 500 and 3000.

Optionally, phase transfer catalysts (PTC) may be added in order to facilitate the polymerization. Such PTC can include, but are not limited to, crown-ethers, tetraalkyl ammonium salts such as tetraethylammonium bromide [(C₂H₅)₄N⁺Br⁻], tetrabutylammonium iodide [C₄H₉)₄N⁺I⁻], cetyltrimethylammonium bromide [nC₁₆H₃₃(CH₃)₃N⁺Br⁻], and the like. Preferably, the PTC is cetyltrimethylammonium bromide. The amount of PTC in the mixture will usually be from 0.00001 to 1 moles per mole of catalyst, preferably from 0.0001 to 0.5 moles per mole of catalyst, and preferably from 0.01 to 0.2 moles per mol of catalyst.

Suitable non-metallic catalysts, or activators of the reversible-deactivation radical initiator, include non-metallic compounds comprising low valent sulfur salts containing SO₂ group, or polydialkylamino-substituted unsaturated organic compounds, or combinations thereof. Examples of such catalyst include but are not limited to sodium dithionite (Na₂S₂O₄), sodium methabisulfite (Na₂S₂O₅), sodium sulfite (Na₂SO₃), sodium thiosulfate (Na₂S₂O₃), sodium methanesulfinate (CH₃SO₂Na), sodium benzenesulfinate (C₆H₅SO₂Na), sodium p-toluenesulfinate (p-CH₃C₆H₄SO₂Na), sodium hydroxymethanesulfinate (HOCH₂SO₂Na), sodium formaldehyde bisulfite (HOCH₂SO₃Na), thiourea dioxide [(NH₂)₂C=SO₂], formamidinesulfinic acid [H₂N(=NH)SO₂H], etc., being preferred sodium dithionite (Na₂S₂O4) and formamidinesulfinic acid (H₂N(=NH)SO₂H). The amount of catalyst is dependent upon the desired reaction rate. Generally, the amount of catalyst in step a) is from 0.01 to 20 mol, preferably from 1 to 15 mol, and more preferably from 2 to 8 mol, per mole of reversible-deactivation radical initiator.

Suitable acrylate monomers intervening in the polymerization reaction include but are not limited to, methyl, ethyl, 2-methoxyethyl, 2-ethoxyethyl, isopropyl, n-butyl, iso-butyl, sec-butyl, tert-butyl, hexyl, 2-ethylhexyl, octyl, iso-octyl lauryl, isodecyl, octadecyl, dodecyl, 4-butyl cyclohexyl, hexadecyl, benzyl, tetrahydrofurfuryl, diethylene glycol diethyl ether, and methoxy (polyethylene glycol) acrylate, and acrylates with a hydrophilic character such as 2-hydroxyethyl, hydroxypropyl, and 4-hydroxybutyl acrylate. The polyacrylate content in the copolymer can be from 1 to 90 wt% based on the weight of the vinyl halide. Preferably, the acrylate content is from 3 to 70 wt%, more preferably from 5 to 50 wt%, based on the weight of the vinyl halide in the copolymer.

The amount of acrylate monomer in the initial load is from 0.2 to 8 mol%, preferably from 0.5 to 6 mol%, and more preferably from 1 to 5 mol%, of acrylate monomer in respect to the initial load of vinyl halide.

Suitable vinyl halide monomers include, but are not limited to, vinyl chloride and its structurally related derivatives, including vinylidene chloride and 2-chloropropene. In any of the embodiments of the invention, the vinyl halide monomer can be vinyl chloride.

Before the start of the polymerization, the initial load of vinyl halide is from a 110 to a 200 wt%, preferably from a 110 to a 160 wt%, and more preferably from a 115 to a 150 wt%, of the total amount of vinyl halide necessary to obtain the targeted amount of the copolymer of the targeted composition.

As mentioned above, the remaining amount of the acrylate monomer needed to obtain the targeted amount of the copolymer of the targeted composition is added to the reactor throughout the polymerization at a decreasing flow rate.

The decreasing flow rate of the acrylate can be conveniently characterized by the amount of acrylate added at different moments during the process. For example, if step b) above is divided into four consecutive stages of equal duration, the amount of acrylate monomer added in the first stage is from 30 to 90 wt% of the total acrylate fed in step b), the amount of acrylate monomer added in the second stage is from 5 to 26 wt% of the said total acrylate, the amount of acrylate monomer added in the third stage is from 3 to 23% of the said total acrylate, and the amount of acrylate monomer added in the fourth stage is from 2 to 21 wt% of the said total acrylate.

In a particular embodiment, the decreasing flow rate is such that if step b) above is divided into four consecutive stages of equal duration, the amount of acrylate monomer added in the first stage is from 40 to 90 wt% of the total acrylate fed in step b), the amount of acrylate monomer added in the second stage is from 5 to 23 wt% of the said total acrylate, the amount of acrylate monomer added in the third stage is from 3 to 21 wt% of the said total acrylate, and the amount of acrylate monomer added in the fourth stage is from 2 to 16 wt% of the said total acrylate.

In another particular embodiment, the decreasing flow rate is such that if step b) above is divided into four consecutive stages of equal duration, the amount of acrylate monomer added in the first stage is from 50 to 90 wt% of the total acrylate fed in step b), the amount of acrylate monomer added in the second stage is from 5 to 20 wt% of the said total acrylate, the amount of acrylate monomer added in the third stage is from 3 to 17 wt% of the said total acrylate, and the amount of acrylate monomer added in the fourth stage is from 2 to 13 wt% of the said total acrylate.

These profiles can be implemented by using both continuously varying flow rates and dividing the profile in periods of constant flow rate.

In a particular embodiment of the first aspect of the invention, once all the acrylate has been charged, the process further comprises a step c) of carrying out a final injection of an additional amount of the vinyl halide monomer, or of the non-metallic catalyst (optionally accompanied by an additional amount of a phase transfer catalyst), or of a thermal or redox radical initiator, or mixtures thereof. As a result of this final reaction step, the polymerization of all the acrylate is accelerated and a copolymer substantially free of unreacted acrylate monomer is obtained, so ensuring the complete polymerization of acrylate.

The term "substantially free of" is designed to exclude the presence of a component, particularly of the unreacted acrylate monomer. It stands for a presence of such a component of less than a 1000-2000 ppm, preferably fromm 500 to 1500n and more preferably less than 500.

When in step c) the final injection is of an additional amount of the vinyl halide monomer, an additional amount of the non-metallic catalyst (optionally accompanied by an additional amount of a phase transfer catalyst), or of a thermal or redox radical initiator, can also be loaded into the reactor in order to further accelerate the polymerization of the remaining unreacted acrylate monomer.

The amount of vinyl halide monomer added in step c) can be from 2 to 50 wt%, preferably from 5 to 40 wt%, and more preferably from 7 to 30 wt%, of the total weight of vinyl halide monomer added in the reactor.

The required dose of the non-metallic catalyst in step c) ranges from 0.01 to 8 mol, preferably from 0.1 to 5 mol, and more preferably from 0.5 to 4 mol per mol of initiator added in step a).

The amount of phase transfer catalyst in step c) will usually be from 0.00001 to 1 moles per mole of catalyst, preferably from 0.0001 to 0.5 moles per mole of catalyst, and preferably from 0.01 to 0.2 moles per mol of catalyst in said step c).

The radical initiator added in step c) is selected from the group consisting of thermal and/or redox initiators which may be used without any limitation regarding their water solubility. Suitable thermal initiators are well known in the art and include, but are not limited to, inorganic peroxides, such as ammonium peroxodisulfate, sodium peroxodisulfate, potassium peroxodisulfate, and hydrogen peroxide; organic peroxides, including percarbonates, diacyl peroxides such as dibenzoyl peroxide, alkyl peroxides such as tert-butyl hydroperoxide, benzoil peroxide, lauroyl peroxide, cumyl hydroperoxide and the like, dialkyl peroxides such as di-tert-butyl hydroperoxide, and acyl alkyl peroxides such as tert-butyl peroxybenzoate; and azo initiators, such as 2,2'-azobis(2-methylbutyronitrile), 2,2'-azobis(2-methylpropio-nitrile), 2,2'-azobisiso-butyronitrile and the like. Examples of redox initiators include, but are not limited to, inorganic peroxides paired with a suitable reducing agent such as sulfites, metabisulfites, sodium dithionite, sodium thiosulfate, sodium formaldehydesulphoxylate, a mixture of disodium salt of 2-hydroxy-2-sulphinoacid, of sodium sulphite and of disodium salt of 2-hydroxy-2-sulphoacid, or a mixture of disodium salt of hydroxysulphinoacetic acid and of disodium salt of hydroxysulphoacetic acid; and tert-butyl hydroperoxide and hydrogen peroxide paired with ascorbic acid. Water soluble initiators are preferred. These initiators are added in amounts of from 0.01 to 1% by weight, preferably from 0.05 to 0.7% by weight, more preferably from 0.10 to 0.5 by weight, based on the targeted amount of copolymer.

At certain times of the polymerization an additional amount of the vinyl halide monomer can be added to the reactor, this addition being continuous or as one or more injections and being accompanied by the addition of the acrylate monomer. Accordingly, in another particular embodiment of the process of the invention, during step b), an additional amount of the vinyl halide monomer is added to the reactor together with an additional amount of from 0.5 to 4% mol, preferably from 0.8 to 3.5% mol, and more preferably from 1 y el 3% mol, of the acrylate monomer with respect to the additional amount of the vinyl halide monomer, wherein the addition of the vinyl halide monomer is continuous or in one or more injections.

The mentioned additional injections of vinyl halide monomer and acrylate monomer during the polymerization process have the effect of speeding up the reaction rate, and so, the overall process time is reduced, without affecting the targeted composition of the random copolymer formed.

There is no limitation concerning the moment when the injections during step b) are carried out, or on the number of injections. Good results are obtained with a number of injections of vinyl halide of one to four, preferably one.

As an instance, the additional amount of vinyl halide added during step b) is from 1 to 100 wt%, preferably from 5 to 70 wt%, and more preferably between 7 to 50 wt%, of the amount of vinyl halide in the targeted amount of the copolymer of the targeted composition.

When during step b) an additional amount of the vinyl halide monomer, accompanied by the addition of the above mentioned amount of acrylate monomer, is added to the reactor, an additional amount of the non-metallic catalyst (optionally accompanied by an additional amount of a phase transfer catalyst), or of a thermal or redox radical initiator can also be loaded into the reactor in order to further accelerate the polymerization of the remaining unreacted acrylate monomer. These additions can be continuous or in one or more injections.

The required dose of the non-metallic catalyst in step b) ranges from 0.01 to 5 mol, preferably from 0.1 to 4 mol, and more preferably from 0.2 to 3 mol per mol of initiator added in step a). This addition can be made continuously or in several injections.

The amount of phase transfer catalyst in step b) will usually be from 0.00001 to 1 moles per mole of catalyst, preferably from 0.0001 to 0.5 moles per mole of catalyst, and preferably from 0.01 to 0.2 moles per mol of catalyst in said step b). This addition can be made continuously or in several injections.

The thermal or redox radical initiator is added in amounts of from 0.01 to 1% by weight, preferably from 0.02 to 0.7% by weight, more preferably from 0.05 to 0.5 by weight, based on the targeted amount of copolymer. This addition can be made continuously or in several injections.

Once the reaction is finished, the unreacted vinyl halide is recovered by depressurizing the reactor and vacuum distillation, and the copolymer is isolated by filtration or centrifugation of the resulting suspension, followed by washing with water and drying.

Depending on the specific acrylate monomer and its content in the copolymer, rigid PVC materials with modified properties as well as self-plasticized PVC with different degrees of flexibility can be obtained. The appropriate acrylate monomer and its content for the aimed specific application of the final copolymer can be easily determined by a skilled person in the art by routine tests and with the help of the teachings of the examples given in this description.

As mentioned above, the polymerization process in aqueous medium of this invention can be carried out in suspension, emulsion or microsuspension. The selection of the type of polymerization can be made according to the intended applications of the copolymers obtained. As an instance the polymerization process of the invention is carried out in suspension.

The most adequate conditions for carrying out said processes vary depending on the type of polymerization in aqueous medium and the parameters considered by the expert in the art, such as, for example, the type and content of the starting monomers, and the like. These can be easily determined by said skilled person in the art by routine tests and with the help of the teachings of the examples given in this description.

When the type of polymerization process is in suspension, it can be carried out in deionised water, being the weight to weight ratio of water with respect to total amount total comonomers from 1 and 4 w/w, preferably from 2 and 3 w/w.

As commented above, an inherent result of the process of the invention is that it provides an essentially homogeneous random copolymer from a vinyl halide monomer and an acrylate monomer with improved transparency and tensile properties and substantially free of unreacted acrylate monomer. Additionally, copolymers with controlled molecular weights that increase with monomer conversion can be obtained.

The terms Mn and Mw relates to the number average molecular weight and to the weight average molecular weight, respectively, and the relation Mn/Mw to the polydispersity index (PI).

The process of the invention results in copolymers with narrow molecular weight distributions, which can be of a Mw/Mn ratio of 3.0 or less, even of 2.0 or less, thus avoiding distortion of the properties due to polymer chains very long or very short.

An additional advantage is that a copolymer with reduced structural defects in the polyvinyl halide sequences is obtained, which are responsible for their good thermal stability. These structural characteristics make the product of the invention particularly suitable to use as a raw material in the production of different articles of manufacture for multiple applications.

Such properties indicates that the product obtainable by the process of the invention is chemically/structurally different to the vinyl halide/acrylate copolymers of the prior art.

The copolymers of the invention can be formulated in a similar way to commercial free radical PVC resins, adding suitable additives for specific applications and using the same processing equipment, thus obtaining a variety of PVC compounds with different properties suitable for different applications. The applications of the copolymers obtained by the process of the invention are not at all limited, and include all types of rigid or flexible articles manufactured by injection, extrusion, calendaring, extrusion blow moulding, thermoforming, vacuum moulding, and so on, with a large number of applications.

Throughout the description and claims the word "comprise" and variations of the word, are not intended to exclude other technical features, additives, components, or steps. Additional objects, advantages and features of the invention will become apparent to those skilled in the art upon examination of the description or may be learned by practice of the invention.

The following examples are provided by way of illustration, and they are not intended to be limiting of the present invention. Furthermore, the present invention covers all possible combinations of particular and preferred embodiments described herein.

### EXAMPLES

In examples below, the characterization of the copolymers was carried out on pressed sheets prepared by formulating copolymers with 2 phr of a Ca/Zn stabilizer and 3 phr of epoxydated soy bean oil, wherein phr is an abbreviation for "parts per hundred parts of resin".

Formulations were homogenized in a two-roll mill at 160 °C and pressed at the same temperature.

Tensile properties were determined in INSTRON 4301 according to the UNE-EN ISO 527 standard.

The dynamic mechanical thermal behaviour was evaluated in a Triton DMA equipment and the Tgs were obtained.

The molecular weight distribution expressed as Mn (number average molecular weight), Mw (weight averaged molecular weight) and the Mn/Mw=PI (polydispersity index) were measured by gel permeation chromatography (GPC) in a chomatograph Waters, model 717.

The percentage of polyacrylate in the copolymer and the structure of the copolymer chain were calculated from the spectra of 1H Nuclear Magnetic Resonance (NMR) obtained in a Brucker 300 MHz equipment.

The residual content of residual monomers was quantified using a head space gas chromatography technique in a AGILENT 680 GC chromatograph.

The transparency was evaluated as a function of the L* parameter obtained in a MINOLTA spectrophotometer CM3610d using plaques of 1 mm.

A semi-rigid formulation obtained with a conventional PVC resin (k value 70) and 20 phr of di(2-ethylhexyl)phthalate (DEHP) was prepared as a reference. This semi-rigid formulation hereinafter called "conventional formulation", had a tensile strength of 539 kg /cm² and 241 % of elongation at break

Random copolymers of the present invention were also compared with a block copolymer (obtained as in comparative example 1).

### COMPARATIVE EXAMPLE 1

In a reactor of 7.5 litre capacity, equipped with a stirrer, cooling/heating jacket, injection pipette, load pump, dosing pump, and a computerized control system, 3500 g of deionized water, 198 g of a 6.0 wt% a solution of a polyvinyl alcohol with a hydrolysis degree of 72.5% in deionized water, 0.72 g of sodium bicarbonate and 1.55 g of iodoform were loaded. Once the reactor was closed and the stirrer was connected at 100 rpm, a purge was carried out with nitrogen and subsequently vacuum was applied till 0.1 bar during 5 min. This operation was repeated twice, and finally a vacuum was applied till 0.1 bar for another 5 min. Afterwards, the stirrer speed was increased to 450 rpm and 250 g of butylacrylate were loaded and when 35°C were reached a solution of 4.79 g of sodium dithionite (85% purity) in 50 ml of deionized water was injected to the reactor. The reaction was maintained for 45 minutes

After this time, 1000 g of vinyl chloride were loaded from a pressured bottle and the reaction temperature was increased to 42°C. When this temperature was reached, a 50 ml aqueous solution of 0.72 g of sodium bicarbonate, 0.23 g of cetyltrimethylammonium bromide and 1.6 g sodium dithionite (85% purity) were injected in the reactor.

The reaction was kept under the same conditions during 6 hours and, after this time, the unreacted vinyl chloride was removed by depressurizing the reactor. Then, the obtained suspension was separated by filtration, washed three times with deionized water, and dried with air at 60 °C on a fluidized bed dryer.

This yielded 1021 g of a copolymer with a 26 % of butyl acrylate units, a Mn = 98300 and Mw/Mn = 2.40, two Tgs; the first one at at 84°C and th second at - 7°C. The tensile test gives a 149 kgf/cm² in the tensile strength and 39% of elongation at break. The L* parameter was 75.5.

### COMPARATIVE EXAMPLE 2

In the reactor of 7.5 litre capacity described in the previous example, 3600 g of deionized water, 202 g of a 5.6 wt% solution of a polyvinyl alcohol with a hydrolysis degree of 72.5% in deionized water, 1.8 g of sodium bicarbonate and 1.67 g of a 50% aqueous emulsion of 2,4,4-trimethylpentyl-2 peroxyneodecanoate were loaded.

Once the reactor was closed and the stirrer was connected at 100 rpm, a purge was carried out with nitrogen and subsequently vacuum was applied till 0.1 bar during 5 min. operation was repeated twice, and finally a vacuum was applied till 0.1 bar for another 5 min. Afterwards, the stirrer speed was increased to 350 rpm and 960 g of vinyl chloride were loaded from a pressured bottle and the heating was initiated. When 54 °C were reached, 240 g of butyl acrylate were fed at constant flow for 5 hours, keeping the reaction temperature. Once the feeding was finished, 0.24 g of a 50% aqueous emulsion of 2,4,4-trimethylpentyl-2 peroxyneodecanoate were added and reaction was kept under the same conditions during two additional hours.

After this time, the unreacted vinyl chloride was removed by depressurizing the reactor. Then, the obtained suspension was unloaded and the solid was separated by filtration, washed three times with deionized water, and dried with air at 60 °C on a fluidized bed dryer.

This yielded 995 g of a copolymer with a 24 % of butyl acrylate units, a Mn = 59200 and Mw/Mn = 3.23, an unique Tg at 52 °C and 388 kgf/cm² of tensile strength and 38% of elongation at break. The L* parameter was 86.6.

### EXAMPLE 1

In the reactor of the comparative examples, 3200 g of deionized water, 104 g of a 5.7 wt% aqueous solution of a polyvinyl alcohol with a hydrolysis degree of 72.5%, 2.4 g of sodium bicarbonate, 0.17 g of cetyltrimethylammonium bromide, 6.09 g of iodoform, and 60.9 g of butyl acrylate were loaded. Once stirring was connected, and the air on the reactor evacuated, and while heating in order to reach a temperature of 42 °C, 1530 g of vinyl chloride were loaded, followed by the injection of a freshly prepared solution of 12.55 g of sodium dithionite (85% purity) in 50 ml of deionized water.

Feeding of the rest of acrylate was initiated immediately. The feeding was carried out during 7 hours at a decreasing flow rate, so that after 40 min a total of 1.15 mol of butyl acrylate were added, after 97 min 1.55 mol, after 233 min 1.70 mol, and after 420 min 1.74 mol. At this moment, the acrylate feed was stopped. The temperature was kept at 42 °C throughout. After 30 min of reaction under the same conditions, the reactor was depressurized, and the resulting suspension was processed as in Example 1.

1128 g of a copolymer with a 20% of butyl acrylate units, Mn = 86500, Mw/Mn = 1.7, and a Tg = 53 °C. The residual BA content in the copolymer is 897 ppm.

The formulated compound gave 385 kfg/cm² of tensile strength, and 243% of elongation at break similar to a conventional plasticized formulation and much better than comparative examples 1 and 2. The L* parameter was 93.4.

### EXAMPLES 2-5

Four reactions were carried out in a reactor as the one described in example 2, with an initial load of 3200 g of deionized water, 2.4 g of sodium bicarbonate, 104 g of a 5.7 wt% aqueous solution of a polyvinyl alcohol with a hydrolysis degree of 72.5%, 0.17 g of cetyltrimethylammonium bromide, 6.09 g of iodoform, 60.9 g of butyl acrylate and 1530 g of vinyl chloride. The polymerization was started with the injection of a solution of 12.55 g of sodium dithionite (85% purity) in 50 ml of deionized water and was carried out at 42 °C.

After said injection, the n-butyl acrylate was added to the reactor following the profile of decreasing flow rates used in the Example 1 but in Example 2 the n-butyl acrylate was added during 1 h, in Example 3 during 2 h, in Example 4 during 3 h and in Example 5 during 4 h. The total amounts of butyl acrylate loaded in each of these examples were 1.39, 1.64, 1.69 and 1.70 mol, respectively.

The copolymer obtained in each of these reactions was isolated as described in example 1, and once dried, examples 2-5 yielded 524 g, 832 g, 853 and 865 g, respectively, with Mn = 49.900, 58300, 65500 and 68700 and Mw/Mn = 1.8, 1.9, 1.8 and 1.9, respectively.

The n-butyl acrylate content of the copolymer as analyzed by ¹H NMR was 24, 22, 22 and 22%, respectively, and DMTA gave a unique Tg for each product: 48, 50, 49, 51 °C, respectively. The residual BA content in the copolymer was 2194, 1791, 1400, 1184 ppm, respectively.

The tensile properties were very close, and values from 371, 384, 340 and 329 kfg/cm² for tensile strength, and from 252, 263, 268 and 219% for the elongation at break were obtained. The L* parameter were 92.6, 92.8, 93.5 and 93.2 These values were coherent with the ones obtained with 7 hours of reaction (example 1)

### EXAMPLE 6:

In the reactor described in the previous examples, the polymerization of a mixture of 3200 ml of deionized water, 118 g of a 5.7 wt% solution of polyvinyl alcohol at a hydrolysis degree of 72.5%, 2.40 g of sodium bicarbonate, 0.17 g of cetyltrimethylammonium bromide, 6.09 g of iodoform, 61 g of n-butyl acrylate and 1530 g of vinyl chloride was initiated at 42 °C by the injection of a freshly prepared solution of 12.55 g of sodium dithionite (85% purity) in of 50 ml deionized water, at which moment the reaction was considered to be time zero.

After 10 minutes, the feeding of n-butyl acrylate was started, with a decreasing flow rate so that after 20 minutes a total of 0.72 mol, and after 50 min a total of 1.20 mol of the mentioned monomer had been loaded.

At that moment, 312.5 g of vinyl chloride were injected, followed by 12.48 g of n-butyl acrylate. Feeding was continued so that after 83 min a total of 1.49 mol of acrylate, and after 117 min 1.72 of acrylate, had been loaded.

Then a new injection of 250 g of vinyl chloride was carried out followed by an injection of 11.52 g of n-butyl acrylate, and the supply of acrylate was continued so that at 172 min a total of 1.90 mol of acrylate had been loaded, and at 249 min the supply was stopped, with a total of 2.02 mol of n-butyl acrylate loaded in the reactor.

The reaction was prolonged for 45 min under the same conditions, the reactor was depressurized and the product was isolated, resulting in 1141 g of a copolymer with a 20 % of butyl acrylate units (¹H NMR), Mn = 66600, Mw/Mn = 2.0 (GPC) and Tg = 53°C (DMTA).

The tensile strength turned out to be 391 kgf/cm² and the elongation at break was of 222%. The residual BA content in the copolymer is 806 ppm.

### EXAMPLE 7

The reactor described in the previous examples was loaded with 3520 ml of deionized water, 2.64g of sodium bicarbonate, 113 g of a 5.37 wt% aqueous solution of a polyvinyl alcohol with a degree of hydrolysis of 72.5%, 4.44 g of iodoform, 0.15 g of cetyltrimethylammonium bromide and 37.9 g isobutyl acrylate. Once the reactor was loaded and stirred at 300 rpm, 1512 g of vinyl chloride were loaded while the mixture was heated a 42 °C. At that moment, 50 ml of an aqueous solution of 11.43 g of sodium dithionite (85% purity) was injected and isobutyl acrylate feeding was started with a dosing pump. The temperature was kept at 42°C throughout the reaction.

The feeding of the isobutyl acrylate was carried out at decreasing flow rate, so that in the first hour a total of 1.43 mol of isobutyl acrylate had been loaded, in the second hour a total of 1.86 mol, in the third a total of 2.08 mol, and in the fourth a total of 2.10 mol. At that moment, the feeding was interrupted, and 125 g of vinyl chloride were injected. The reaction was prolonged during 60 min, the reactor was depressurized and the product was isolated.

A total of 1050 g of a copolymer were yielded with a 33% of isobutyl acrylate units (¹H NMR), Mn = 61600 and Mw/Mn = 2.3 (GPC) and Tg = 48°C (DMTA). The residual i-BA content in the copolymer is 1286 ppm. The tensile strength was 284 kgf/cm² and the elongation at break was of 83%.

### EXAMPLE 8

In the reactor mentioned in previous examples, a mixture of 3520 ml deionized water, 229 g of a 3.3 wt% solution of a polyvinyl alcohol with a degree of hydrolysis of 80%, 84 g of a 3 wt% aqueous solution of hydroxypropyl methylcellulose, 2.64 g of sodium bicarbonate, 0.16 g of cetyltrimethylammonium, 4.49 g of iodoform and 53.48 g of 2-ethylhexyl acrylate, was stirred at 300 rpm and heated at 40°C. Once emptied by vacuum, 1562 g of vinyl chloride were loaded, and a solution of 11.55 g sodium dithionite (85% purity) in 50 ml of deionized water was injected.

Immediately, feeding of 2-ethylhexyl acrylate was initiated with a decreasing flow rate, so that during the first 65 min a total of 0.84 mol of acrylate (including the initial load) had been loaded. At that moment, 312.5 g of vinyl chloride were injected, followed by an injection of 13.1 g of 2-ethylhexyl acrylate, while a decreasing feeding of 2-ethylhexyl acrylate was continued. At 132 min of reaction, when a total of 1.12 mol of acrylate had been loaded, another injection of 250 g of vinyl chloride was carried out, followed by an additional one of 10.3 g of 2-ethylhexyl acrylate. The acrylate dosing went on until 240 min of reaction, when a total of 1.27 mol of acrylate had been loaded. At that moment, the dosing of acrylate stopped and 137.5 g of vinyl chloride were injected together with a solution of 4.62 g of sodium dithionite (85% purity) in 50 ml of water. The reaction was kept at the same temperature during an extra 45 min, after which time the reactor was depressurized and the product was isolated.

A total of 1329 g of a copolymer were yielded with a content of 2-ethylhexyl acrylate of 22% (¹H NMR), Mn = 70900 and Mw/Mn = 2.2 (GPC) and Tg = 61°C (DMTA), a residual EHA content of 77 ppm and 344 kgf/cm² of tensile strength and 237% of elongation at break.

### EXAMPLE 9

In the reactor described above 4000 ml of deionized water, 220 g of a 5.37 wt% solution of a polyvinyl alcohol with a degree of hydrolysis of 72.5%, 3.0 g of sodium bicarbonate, 0.14 g of cetyltrimethylammonium bromide, 3.91 g of iodoform, and 111.8 g of 2-ethylhexyl acrylate were loaded. Once the oxygen of the reactor was removed using vacuum, 1290 g of vinyl chloride were loaded, and the mixture was heated to 42°C.

When said temperature was reached, a solution of 10.08 g of sodium dithionite (85% purity) in 50 ml of water was pumped.

Keeping the reaction at 42°C throughout, the feeding of of 2-ethylhexyl acrylate was carried out at decreasing flow rate, so that at 63 min a total of 1.73 mol of acrylate had been loaded, 2.16 mol at 150 min and 2.24 mol at 300 min, at which moment acrylate feeding was stopped. Then 187.5 g of vinyl chloride were injected together with a solution of 2.52 g of sodium dithionite (85% purity) in 50 ml of deionized water. The reaction was kept under the same conditions for 45 min, the reactor was depressurized and the product isolated.

A yield of 1009 g of copolymer was obtained, with a content of 2-ethylhexyl acrylate of 35% (¹H NMR), Mn = 88900, Mw/Mn = 2.3 (GPC) and a Tg = 41°C (DMTA) and a residual EHA content of 1 ppm. The tensile strength is 90 kgf/cm² and the elongation at break 257%.

### EXAMPLE 10

In a reactor as the ones described above, 3520 ml of deionized water, 110 g of a 5.37 wt% aqueous solution of a polyvinyl alcohol with a degree of hydrolysis of 72.5%, 2.64 g of sodium bicarbonate, 0.16 g of cetyltrimethylammonium bromide, 4.67 g of iodoform, and 37.9 g of ethyl acrylate were loaded.

Once the oxygen of the reactor was removed using vacuum and stirring at 300 rpm, 1498 g of vinyl chloride were injected and the mixture was heated at 42°C. The reaction was initiated by the injection of a solution of 12.03 g of sodium dithionite (85% purity) in 50 ml of deionized water. Immediately afterwards, the dosing of ethyl acrylate was initiated at a decreasing flow rate, so that in the first hour a total of 1.81 mol had been loaded, 2.22 mol at the end of the second hour, 2.36 mol at the end of the third hour, and 2.40 mol at the end the fourth hour. The reactor was maintained at the same temperature for an extra hour, the reactor was depressurized and the product was isolated as in the previous examples.

This yielded a total of 1133 g of copolymer with a content of 36% (NMR) of ethyl acrylate, Mn = 72600, Mw/Mn = 2.1 (GPC) and Tg = 56 °C (DMTA) and the residual EA content is 358 ppm.

The samples prepared as described above gave a tensile strength of 426 kgf/cm² and an elongation of 233%.

### REFERENCES CITED IN THE APPLICATION

1. EP 0358181
2. US 3884887
3. US 2009/0143547
4. WO 2003002621
5. A. D. Jenkins et al., Pure Appl. Chem., 2010, Vol. 82, No. 2, pp. 483-491
6. WO 2006080928

## Claims

1. A process for the preparation of an essentially homogeneous random copolymer from a vinyl halide monomer and an acrylate monomer by reversible-deactivation radical polymerization in aqueous medium, the process comprising the following steps:
a) for a targeted amount and composition of the random copolymer, loading in the reactor: water, an amphiphilic substance, a buffer, a reversible-deactivation radical initiator, optionally, a phase transfer catalyst, from 0.2 to 8 mol%, preferably from 0.5 to 6 mol%, and more preferably from 1 to 5 mol%, of acrylate monomer in respect to the amount of vinyl halide loaded in this step a),
from a 110 to a 200 wt%, preferably from a 110 to a 160 wt%, and more preferably from a 120 to a 150 wt%, of the total amount of vinyl halide necessary to obtain the targeted amount of the copolymer of the targeted composition, and
adding a non-metallic catalyst and, optionally, a phase transfer catalyst, in order to initiate de polymerization reaction; and
b) adding the amount of the acrylate monomer necessary to obtain the targeted amount of the copolymer of the targeted composition, wherein the addition is carried out at a decreasing flow rate,
thereby the composition of the formed copolymer remaining essentially constant throughout the whole reaction process.

2. The process according to claim 1, wherein in step a) the amount of the non-metallic catalyst is from is from 0.01 to 20 mol, preferably from 1 to 15 mol, and more preferably from 2 to 8 mol, per mole of initiator.

3. The process according to any one of claims 1-2, wherein the decreasing flow rate is such that if step b) is divided into four consecutive stages of equal duration, the amount of acrylate monomer added in the first stage is from 30 to 90 wt% of the total acrylate fed in step b), in the second stage from 5 to 26 wt% of the said total acrylate, in the third stage from 3 to 23% of the said total acrylate, and in the fourth stage from 2 to 21 wt% of the said total acrylate.

4. The process according to claim 3, wherein the decreasing flow rate is such that if step b) is divided into four consecutive stages of equal duration, the amount of acrylate monomer added in the first stage is from 50 to 90 wt% of the total acrylate fed in step b), in the second stage from 5 to 20 wt% of the said total acrylate, in the third stage from 3 to 17 wt% of the said total acrylate, and in the fourth stage from 2 to 13 wt% of the said total acrylate.

5. The process according to any one of claims 1-4, further comprising a step c) of carrying out a final injection of an additional amount of the vinyl halide monomer, or of the non-metallic catalyst and, optionally, an additional amount of the phase transfer catalyst, or of a thermal or redox radical initiator, or mixtures thereof.

6. The process according to claim 5, wherein in step c) the final injection is of an additional amount of the vinyl halide monomer in conjunction with an additional amount of the non-metallic catalyst and, optionally, an additional amount of the phase transfer catalyst, or of a thermal or redox radical initiator.

7. The process according to any one of claims 5-6, wherein in step c) the amount of vinyl halide monomer is from 2 to 50 wt%, preferably from 5 to 40 wt%, and more preferably from 7 to 30 wt%, of the total weight of vinyl halide monomer added in the reactor.

8. The process according to any of the claims 1-7, wherein the targeted composition of the random copolymer is such that the polyacrylate content in the random copolymer is from 1 to 90 wt%, preferably from 3 to 70 wt%, and more preferably from 5 to 50 wt%, based on the weight of the vinyl halide in the copolymer.

9. The process according to any one of claims 1-8, wherein during step b), an additional amount of the vinyl halide monomer is added to the reactor together with an additional amount of from 0.5 to 4% mol, preferably from 0.8 to 3.5% mol, and more preferably from 1 y el 3% mol, of the acrylate monomer with respect to the additional amount of the vinyl halide monomer, wherein the addition of the vinyl halide monomer is continuous or in one or more injections.

10. The process according to claim 9, wherein the additional amount of vinyl halide added during step b) is from 1 to 100 wt%, preferably from 5 to 70 wt%, and more preferably between 7 to 50 wt%, of the amount of vinyl halide in the targeted amount of the copolymer of the targeted composition.

11. The process according to any one of claims 9-10, wherein the additional amount of vinyl halide added during step b) is carried out in conjunction with the addition of an additional amount of the non-metallic catalyst and, optionally, a phase transfer catalyst, or of a thermal or redox radical initiator, wherein these additions are continuous or in one or more injections.

12. The process according to any one of claims 1-11, wherein the vinyl halide monomer is vinyl chloride.

13. The process according to any one of claims 1-12, wherein the polymerization is carried out in aqueous suspension.

14. An essentially homogeneous random copolymer obtainable by the process of any one of claims 1-13.

15. An article of manufacture made of a copolymer as defined in claim 14.
